# EUROPÄISCHE PATENTSCHRIFT

(11) **EP 0 984 226 B1**
(45) Veröffentlichungstag und Bekanntmachung des Hinweises auf die Patenterteilung: **02.07.2003**
(21) Anmeldenummer: 98810876.7
(22) Anmeldetag: 03.09.1998
(51) Int. Cl.: F24D 3/18, F24D 19/10

(54) **Verfahren zur Erzeugung von warmem Trink- und Heizwasser sowie Heizungsanordnung bzw. Kompaktheizungsanordnung hierfür**
Method for preparing warm sanitary and heating water and associated heating apparatus esp. compact heating apparatus
Méthode pour produire de l'eau chaude sanitaire et de chauffage et installation de chauffage compacte associée

(43) Veröffentlichungstag der Anmeldung: 08.03.2000
(73) Patentinhaber: Alpha-InnoTec GmbH, 95359 Kasendorf (DE)
(72) Erfinder: Egli, Peter, 6208 Oberkirch (CH)
(74) Vertreter: Roshardt, Werner Alfred, Dipl.-Phys.

(56) Entgegenhaltungen:
- WO-A-92/19919
- DE-A- 3 423 262
- DE-U- 8 313 741
- FR-A- 2 679 016

## Beschreibung

### Technisches Gebiet

Die Erfindung betrifft ein Verfahren zur Erzeugung von warmem Trink- und Heizwasser sowie eine Heizungsanordnung bzw. Kompaktheizungsanordnung hierfür.

### Stand der Technik

In der französischen Patentanmeldung FR-A 2 679 016 ist eine Anlage mit einer Kompressions-Wärmepumpe beschrieben, mit der das Hausinnere (Heizung), warmes Brauchwasser und das Wasser eines Schwimmbads heizbar waren. Es handelte sich hier um eine Monofluidanlage. Unter einer Monofluidanlage wird eine Anlage verstanden, bei der alle in sich geschlossenen Systeme vom selben Wärmetransportfluid durchflossen werden. Es erfolgt somit durch das Wärmetransportfluid eine direkte Beheizung ohne einen zwischengeschalteten Wärmetauscher.

Die Hausinnenheizung der FR-A 2 679 016 hatte mehrere Heizstränge, durch die einzeln über elektromagnetische Ventile Mikroprozessor gesteuert das Wärmetransportfluid transportierbar war. Die Ventile am Ende jedes Heizungsstranges wirkten als Expansionsventile. Die Ausgänge der Ventile waren in einem Rohrsystem zusammengefasst, welches einen Anschluss an einen Verteiler sowie an ein weiteres Druckreduzierventil hatte, dessen Ausgang zu einem Wärmetauscher führte, über den Wärme von bereits benütztem Brauchwasser (Abwasser) aufnehmbar war. Der Ausgang des Verteilers führte zu einem Register, dessen Ausgang mit dem Eingang der Kompressor-Wärmepumpe verbunden war. Das Rohrsystem konnte über ein weiteres Druckreduzierventil zur Wiedergewinnung von Wärme aus der Luft angeschlossen werden.

Während des Sommers oder in den Zwischenjahreszeiten war es manchmal notwendig, warmes Brauchwasser herzustellen oder das Wasser des Schwimmbads zu erwärmen, ohne das Hausinnere zu heizen. Für diesen Fall war ein Bypass mit einem über eine Steuerung einstellbaren Druckreduzierventil vorgesehen, der die Heizschlangen im Hausinneren überbrückte.

Eine Steuerung des Kompressors in Abhängigkeit der benötigten Wärmeleistung erfolgt Mikroprozessor gesteuert in Abhängigkeit des Gasdrucks in der Eingangsleitung sowie unter Beachtung der dortigen Temperatur des Wärmetransportfluids.

Im deutschen Gebrauchsmuster DE-U 83 13 741.6 wurde das Wärmetransportfluid lediglich durch einen ersten Wärmetauscher für das zu erwärmende Trinkwasser und danach immer durch einen weiteren Wärmetauscher für das Heizungswasser geführt. Eine Heizfluidmengensteuerung über Bypasse war der DE-U 83 13 741.6 fremd.

In der internationalen Patentanmeldung WO 92/19919 durchlief das Wärmetransportfluid einen ersten Wärmetauscher in einem Warmwasseraufbereiter zur Trinkwassererwärmung und von dort in eine zu beheizende Wand. Auch hier wurde eine Monofluidanlage eingesetzt.

### Darstellung der Erfindung

### Aufgabe der Erfindung

Aufgabe der Erfindung ist es, ein Verfahren mit einem Kompressions-Wärmepumpenprozess aufzuzeigen, bei dem eine optimale Aufheizung von Trinkwasser sowie des Heizungswassers für eine Heizung möglichst bei minimal ausgelegter Heizungsanordnung erreicht wird.

### Lösung der Aufgabe

Die Aufgabe wird dadurch gelöst, dass das Wärmetransportfluid einer Kompressions-Wärmepumpenanordnung immer zuerst durch den Wärmetauscher für das zu wärmende Trinkwasser geführt und dann erst je nach verbleibender Restwärme zum Aufheizen des Heizungswassers verwendet wird. Das Wärmetransportfluid durchströmt hierbei jedoch immer direkt den Wärmetauscher für das Trinkwasser und, sofern ausreichend Restwärme vorhanden ist, dann direkt denjenigen für das Heizungswasser.

### Kurze Beschreibung der Zeichnung

Nachfolgend werden Beispiele des erfindungsgemässen Verfahrens und der erfindungsgemässen Anordnung anhand einer Zeichnung näher erläutert. Es zeigen:
- Fig. 1: ein Wärmeflissbild der erfindungsgemässen Anordnung,
- Fig. 2: ein dazu gehörendes Druck-Enthalpie-Diagramm, wobei der Druck vertikal logarithmisch und die Enthalpie horizontal aufgetragen sind und
- Fig. 3: die in **Figur 1** dargestellte Anlage in einem Aufbau als zweiteilige Kompaktheizungsanordnung.

### Wege zur Ausführung der Erfindung

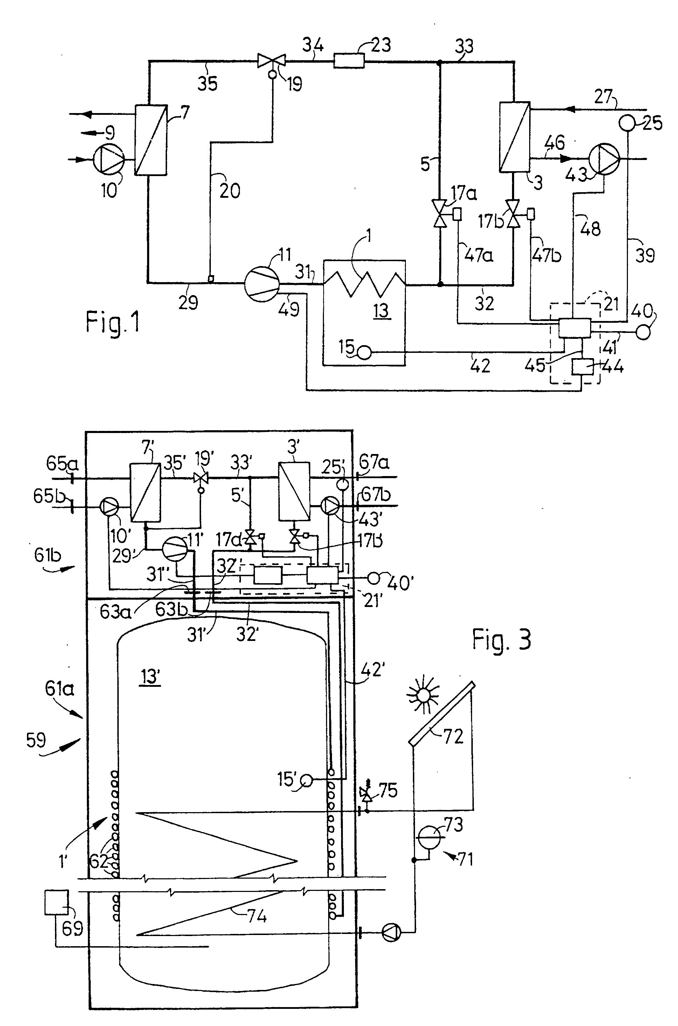

Die Wärmefliessbilddarstellung in **Figur 1** zur erfindungsgemässen Anordnung bzw. Kompaktheizungsanordnung stellt eine Kompressions-Wärmepumpenanordnung dar. Die Anordnung hat einen ersten Wärmetauscher **1** zur Erzeugung von warmem Trinkwasser. Ferner hat sie einen zweiten Wärmetauscher **3** zur Erzeugung von warmem Heizungswasser sowie einen Bypass **5**, mit dem dieser Wärmetauscher **3** überbrückbar ist. Ein dritter Wärmetauscher **7** ist mit einer nicht dargestellten Wärmequelle **9** verbunden, deren Wärmetransportfluid mit einer Pumpe **10** von der Wärmequelle **9** zum Wärmetauscher **7** transportiert wird. Als Wärmequelle wird bevorzugt das Erdreich mittels einer Sondenanlage oder eines Flächenkollektors genutzt, weil hierbei die zur gesamten Wärmeversorgung eines Hauses notwendige Umweltenergie dauerhaft und mit hoher Effizienz zur Verfügung steht. Die Anbindung an eine Lüftungsanlage ist ebenso möglich.

Ferner weist die Anordnung einen Verdichter **11**, einen Warmwasserboiler **13** mit dem Wärmetauscher **1** und einer Messeinrichtung **15**, zwei Magnetventile **17a** und **17b**, ein Expansionsventil **19**, eine Steuereinrichtung **21**, einen Filtertrockner **23** sowie eine weitere Messeinrichtung **25** auf, welche im Rücklauf **27** des Heizungswassers zur Messung dessen Temperatur angeordnet ist. Das Expansionsventil **19** ist über eine Leitung **20** (in der Regel eine Kapillare) mit dem Eingang des Verdichters **11** verbunden. Diese Verbindung dient zur Einstellung des Drucks des Wärmetransportfluids.

Der Ausgang des Wärmetauschers **7** ist über eine Rohrleitung **29** mit dem Eingang des Verdichters **11** verbunden. Der Ausgang des Verdichters **11** führt über die Leitung **31** zum Eingang des Wärmetauschers **1.** Der Ausgang des Wärmetauschers **1** ist mit der Leitung **32** über das Magnetventil **17b** mit dem Eingang des Wärmetauschers **3** und dessen Ausgang über die Leitung **33** mit dem Eingang des Filtertrockners **23** verbunden. Ein- und Ausgang des Wärmetauschers **3** sind mit dem Bypass **5**, wie bereits oben ausgeführt, überbrückbar. Im Bypass **5** ist das Magnetventil **17**a angeordnet. Der Ausgang des Filtertrockners **23** ist über die Leitung **34** mit dem Eingang des Expansionsventils **19** und dessen Ausgang über die Leitung **35** mit dem Eingang des Wärmetauschers **7** verbunden.

Signalmässig ist die Steuereinrichtung **21** über die Leitung **39** mit der Temperaturmesseinrichtung **25** im Heizungsrücklauf **27**, mit einer Aussentemperaturmesseinrichtung **40** über die Leitung **41**, mit der Temperaturmesseinrichtung **15** im Boiler **13** über die Leitung **42**, mit einem Frequenzumrichter **44** über die Leitung **45**, mit einer Pumpe **43** im Heizungsvorlauf **46** über eine Leitung **48** sowie über die Leitungen **47a** und **47b** mit je einem der beiden Magnetventile **17a** und **17b** verbunden. Mit dem Frequenzumrichter ist eine vorzugsweise änderbare Wechselstromfrequenz für den Antrieb des Verdichters **11** erzeugbar. Je höher die Frequenz, desto schneller läuft der Pumpenmotor des Verdichters **11** und desto höher ist die Verdichterleistung. Der Frequenzumrichter **44** ist über die elektrische Leitung **49** mit dem Verdichter verbunden. D.h. der Verdichter **11** ist drehzahlregelbar. Hierdurch kann man im Teillastbereich eine erhebliche Verbesserung der Leistungszahlen erreichen. Ein weiterer Vorteil besteht darin, dass der Verdichter **11** nur für die Leistung in Regelheizbereich ausgelegt werden muss und nur die Bedarfsspitzen bei sehr tiefen Aussentemperaturen durch entsprechende Drehzahlerhöhungen abgedeckt werden können.

Bei einem Betrieb lediglich zur Erzeugung von warmem Trinkwasser ist das Magnetventil **17a** im Bypass **5** vollständig geöffnet und das Magnetventil **17b** in der Leitung **32** zum Wärmetauscher **3** für das Heizungswasser vollständig geschlossen. Durch den Wärmetauscher für das Heizungswasser fliesst somit kein Wärmetransportfluid.

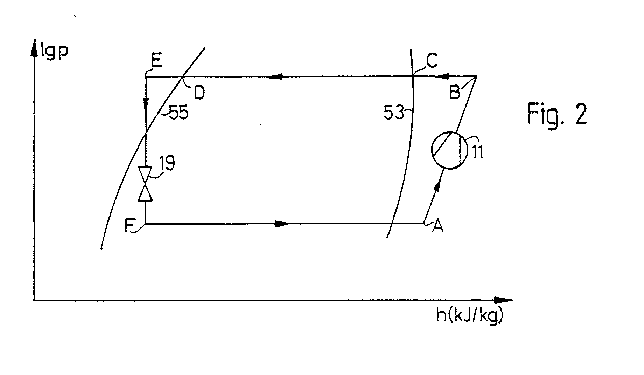

Bei der Beschreibung des Prozesses zum Erwärmen des Trinkwassers wird mit dem Zustand des Wärmetransportfluids am Ausgang des Wärmetauschers **7** begonnen. Das Wärmetransportfluid ist hier dampfförmig. Im Druck-Enthalpie-Diagramm der **Figur 2** befinden wir uns somit im Punkt **A**. Die Kurve **53** ist in diesem Diagramm die Grenze zwischen einem Gebiet trockenen Dampfes und dem Nassdampfgebiet des Wärmetransportfluids, wobei rechts das trockene Dampfgebiet liegt. **A** liegt also im Trockendampfgebiet. Durch die Verdichtung des Fluids mit dem Verdichter **11** wird Punkt **B** ebenfalls im Trockendampfgebiet erreicht. Im Wärmetauscher **1** erfolgt nun eine Wärmeabgabe an das zu erwärmende Trinkwasser im Boiler **13**. Ausgehend von Punkt **B** wird der Punkt **C** auf der Kurve **53** erreicht. Unter weiterer Wärmeabgabe, insbesondere durch die Kondensationswärme im Wärmetauscher **1**, beginnt nun der Übergang des Fluids in den flüssigen Aggregatszustand. Der Bereich links von der Kurve **53** bis zu einer Kurve **55**, welche die Grenze zum vollständig flüssigen Zustand des Fluids gekennzeichnet, wird Nassdampfgebiet genannt; d.h. neben Dampf ist Flüssigkeit mit einem gegen links steigenden Flüssigkeitsanteil vorhanden. In Punkt **D** ist reine Flüssigkeit vorhanden, welche im Wärmetauscher **1** noch bis zu Punkt **E** abgekühlt wird. Das flüssige Fluid tritt aus dem Wärmetauscher **1** aus und läuft über den Bypass **5** zum Expansionsventil **19**. Im Expansionsventil **19** erfolgt eine Drucksenkung, wodurch das Fluid unter Abkühlung in den nassdampfförmigen Zustand - Punkt **F** - übergeht. Der Fluidnassdampf nimmt im Wärmetauscher **7** Wärme auf, welche durch die oben erwähnte Sondenanlage **9** zugeführt wird. In dem in **Figur 2** dargestellten Diagramm erfolgt hierdurch eine Bewegung von Punkt **F** im Nassdampfgebiet über die Kurve **53** hinweg zu Punkt **A** im Gebiet des trokkenen Dampfes.

Steigt nun die Temperatur des Trinkwassers im Boiler **13** durch die Wärmeabgabe des im Boiler **13** angeordneten Wärmetauschers **1** über eine vorgegebene Temperatur (z.B. 65°C), so reduziert sich die Wärmeabgabe im Wärmetauscher **1**, wodurch Punkt **E** in den Nassdampfbereich "zurückrutscht". Die vorgegebene Temperatur ist in einem Speicher der Steuereinrichtung **21** abgespeichert. Die Ist-Temperatur des Trinkwassers als indirektes Mass für die Restwärme des den Wärmetauscher **1** verlassenden Wärmetransportfluids wird mit dieser vorgegebenen (abgespeicherten) Temperatur verglichen. Bei Überschreiten dieser vorgegebenen Temperatur durch die Ist-Temperatur wird das Magnetventil **17b** über die Steuerleitung **47b** von der Steuereinrichtung **21** geöffnet und das Magnetventil **17a** im Bypass **5** über die Steuerleitung **47**a geschlossen. Das Wärmetransportfluid strömt jetzt durch den Wärmetauscher **3** zur zusätzlichen Erwärmung von Heizungswasser. Gleichzeitig wird von der Steuereinrichtung **21** über die Steuerleitung **48** die Pumpe **43** im Heizungsvorlauf **46** in Gang gesetzt (die Pumpe **43** kann selbstverständlich auch immer in Betrieb sein). Durch Wärmeabgabe im Wärmetauscher **3** kühlt sich das Wärmetransportfluid ab und verlässt den Wärmetauscher **3** durch die Leitung **33** als Nassdampf oder als Flüssigkeit (Punkt **E** in **Figur 2**). Der weitere Vorgang verläuft analog zum oben Gesagten.

Der Boiler (Warmwasserbehälter) **13** hat eine doppelt emaillierte Wandung, um die aussen die Rohre des Wärmetauschers **1** gewickelt sind. Hieraus ergeben sich die nachfolgenden Vorteile:
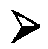 Sehr geringe Verkalkungsneigung der mit dem Trinkwasser in Verbindung stehenden Teile, weil das Trinkwasser über die Boilerwandung erhitzt wird und somit ein grossflächiger Wärmeübergang erfolgt. Durch diesen grossflächigen Wärmeübergang kann bei grosser zu übertragender Wärmemenge die Temperatur verhältnismässig tief gehalten werden.
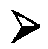 Auch bei einem Leitungsbruch ergibt sich kein Kontakt bzw. keine Vermischung des Trinkwassers mit dem Wärmetransportfluid.
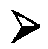 Eine Reinigung und damit Wartung dieses Wärmetauschers **1** entfällt somit.

Unabhängig von der gewählten Betriebsweise kann das am Ausgang des Verdichters **11** vorhandene hohe Temperaturniveau des Wärmetransportfluids immer für die Aufbereitung von warmem Trinkwasser genutzt werden. Dies hat den Vorteil, dass das Trinkwasser im Boiler **13** bei Betrieb der Wärmepumpe selbstregelnd auf Temperatur gehalten wird. Wird warmes Trinkwasser entnommen und somit der Boiler "entwärmt", kann die volle Wärmepumpenleistung an das Trinkwasser abgegeben und somit eine schnelle Aufheizung erreicht werden.

Die Erwärmung von Trinkwasser und von Heizungswasser ist derart durch die Steuereinrichtung **21** ausgelegt, dass die Erwärmung von Trinkwasser immer Vorrang hat. Die Trinkwassertemperatur wird mit der Temperaturmesseinrichtung **15**, wie bereits oben erwähnt, bestimmt. Der zur Messeinrichtung **15** gehörende Messfühler wird bevorzugt im unteren Drittel des Boilers **13** angeordnet. Die Temperatur des Heizungswassers wird mit der Temperaturmesseinrichtung **25**, d.h. deren Messfühler im Rücklauf **27** bestimmt. Ferner ist ein Temperaturaussenfühler **40** vorhanden, der wie auch die beiden anderen Messfühler mit der Steuereinrichtung **21** verbunden ist. Der Aussenfühler **40** dient insbesondere dazu, unter Beachtung der gemessenen Aussentemperatur einen Wert für die Rücklauftemperatur des Heizungswassers vorzugeben. Unterschreitet nun über einen längeren, einstellbaren Zeitraum die mit der Messeinrichtung **25** gemessene Temperatur unter Berücksichtigung der mit dem Aussenfühler gemessenen Aussentemperatur einen vorgegebenen Wert, so ist davon auszugehen, dass mit dem Wärmetransportfluid nicht genügend Wärme gefördert wird. In diesem Fall wird dann von der Steuereinrichtung **21** die Stromfrequenz für den Verdichter **11** durch den Frequenzumrichter **44** durch ein Signal vergrössert. Hierdurch steigt die Verdichterleistung und es ergibt sich ein höherer Wärmefluss. Da der Verdichter **11** drehzahlregelbar ist, kann man die Anlage im Normalfall in einem Teillastbereich d.h. in einem Regelheizbetrieb betreiben. Es müssen dann nur durch eine entsprechende Drehzahlerhöhung die Bedarfsspitzen bei sehr tiefen Aussentemperaturen abgedeckt werden. Soll auf diese nur an wenigen Tagen notwendige Andeckung verzichtet werden, braucht es auch keinen regelbaren Frequenzumrichter **44**. Diese Auslegung der Heizungsanordnung, bei der die Komponenten nicht auf den Spitzen-, sondern auf den Regelheizbetrieb ausgelegt sind, gestattet eine Minimierung der Komponenten, wodurch sich in der Anschaffung und in der Installation eine signifikante Kostenreduzierung ergibt.

Anstelle der beiden Magnetventile **17a** und **17b** kann auch nur ein einziges Dreiwegeventil eingesetzt werden, welches dann an der Verzweigung von Bypass **5** und Leitung **32** anzuordnen wäre.

Es muss auch nicht immer vollständig zwischen Bypass 5 und einem Fluss durch den Wärmetauscher **3** umgeschaltet werden, es kann auch nur ein Teilwärmefluidstrom durch den Bypass und den Wärmetauscher **3** geschickt werden. Auch könnte eine teilweise Abschaltung des Heizungskreislaufs vorgenommen werden, z. B. in der Art, dass bestimmte Zimmer nur zu vorgegebenen Tageszeiten beheizt würden.

Die Verdichterleistung muss nicht über den Frequenzumrichter 44 gesteuert werden. Es können auch andere Steuerungsverfahren je nach gewähltem Verdichtertyp verwendet werden.

**Figur 3** zeigt eine räumliche Aufteilung der in **Figur 1** bereits dargestellten Komponenten zu einer Kompaktheizungsanordnung **59.** Die Kompaktheizungsanordnung **59** ist zweiteilig mit zwei Schrankeinheiten **61a** und **61b** aufgebaut. Aus Platzersparnisgründen sind die beiden Schrankeinheiten **61a** und **61b** übereinander angeordnet, könnten aber auch nebeneinander oder voneinander getrennt aufgestellt werden. Typischerweise hat die Kompaktheizungsanordnung **59** im übereinander gestellten Zustand eine Grundfläche von etwa 80 cm x 80 cm und eine Höhe insgesamt von etwa zwei Metern.

Zur Hervorkehrung, dass die in der Kompaktheizungsanordnung **59** verwendeten Komponenten identisch mit den bereits oben beschriebenen der Heizungsanordnung sind, werden für annähernd gleiche Baugruppen dieselben Bezugszeichen verwendet, welche zur Unterscheidung mit einem Apostroph versehen sind. Die untere Schrankeinheit **61a** enthält im wesentlichen den Boiler **13'** für das zu erwärmende Trinkwasser. Der Boiler **13'** hat eine doppelt emaillierte Wandung um die aussen die Rohre **62** des Wärmetauschers **1'** gewickelt sind. Das Zuflussrohr **31'** zum Wärmetauscher **1'** sowie auch das Rohr **32'** für das aus dem Wärmetauscher **1'** abfliessende Wärmetransportfluid werden nebeneinander nach oben zur Oberseite der Schrankeinheit **61a** geführt und treten dort über je ein Anschlussflansch **63a** und **63b** in die Schrankeinheit **61b** über. Vom Anschlussflansch **63a** führt eine Rohrleitung **31"** zum Ausgang des Verdichters **11'.** Vom Anschlussflansch **63b** führt eine Rohrleitung **32"** zu den Magnetventilen **17a'** und **17b'**. Das Magnetventil **17a'** ist Teil des Bypasses **5'**, mit dem der Wärmetauscher **3'** für das Heizungswasser überbrückbar ist. Die Ausgangsleitung **33'** des Wärmetauschers **3'** führt auch hier zum Expansionsventil **19'**, von dem eine Leitung **35'** dann zum Wärmetauscher **7'** für das Fluid der Wärmequelle **9'** führt. Das Wärmetransportfluid von und zur Wärmequelle **9**' wird auch hier durch eine Pumpe **10'** bewegt. Der Ausgang des Wärmetauschers **7'** ist über die Leitung **29'** mit dem Eingang des Verdichters **11'** verbunden. Das im Wärmetauscher **3'** erwärmte Heizwasser wird mit einer Pumpe **43'** im Vorlauf gefördert. Analog zum bereits oben Gesagten erfolgt die Steuerung des Verdichters **11'**, der beiden Magnetventile **17a** und **17b** sowie der Pumpe **43'** durch eine Steuereinrichtung **21'** durch Auswerten der Messergebnisse einer Temperaturmesseinrichtung **15'** im Boiler **13'**, einer Aussentemperaturmesseinrichtung **40'** und einer Messeinrichtung **25'** für die Temperatur des Heizungswassers.

Durch die Zweiteilung der Kompaktheizungsanlage ist eine Teilung in eine dem Service bevorzugt unterliegende Einheit und eine relative wenig Service benötigende Einheit vorgenommen. Um die Einheit **61b** von der unteren Einheit **61a** zu trennen, müssen lediglich die Anschlussflansche **63a** und **63b** sowie die Signalleitung **42'** zwischen der Temperaturmesseinrichtung **15'** im Boiler **13'** und der Steuereinrichtung **21** getrennt werden. Ferner müssen die Anschlüsse **65a** und **65b** zur Wärmequelle **9'** sowie die Anschlüsse **67a** und **67b** zum Heizungskreislauf getrennt werden. Die obere Einheit kann somit auf einfache Art und Weise von der unteren gelöst und, sofern gewünscht, durch eine neue Einheit ersetzt oder zum Service in eine Werkstätte transportiert werden. Die in den Rohren der oberen Schrankeinheit **61b** befindliche Wärmetransportflüssigkeit muss hierbei abgesaugt werden. Soll auf das Absaugen verzichtet werden, so sind die Anschlussflansche **63a** und **63b** durch sogenannte Split-Kupplungen (Schnellverschlusskupplungen) zu ersetzen, welche beim Öffnen der Rohrverbindungen diese verschliessen.

An die Heizungsanordnung, wie sie in **Figur 1** bzw. als Kompaktheizungsanordnung wie sie in **Figur 3** dargestellt ist, können weitere Baugruppen angeschlossen werden. Als Zusatzheizung für den Boiler **13** kann eine elektrische Zusatzheizung **69** vorgesehen werden, welche bei grossem Bedarf von warmem Trinkwasser oder bei tiefer Umgebungstemperatur von der Steuereinrichtung **21** zugeschaltet wird.

Als Boilerzusatzheizung kann auch eine sog. Solarheizanlage **71** zugeschaltet werden, in der mittels Sonneneinstrahlung warmes Wasser erzeugt wird. Die Solarheizanlage **71** hat einen Sonnenkollektor **72**, ein Expansionsgefäss **73**, einen Wärmetauscher **74** im Boiler **13** und ein Entlüftungsventil **75** sowie eine Pumpe **76**, welche das Wärmetransportfluid durch das dazugehörende Leitungssystem treibt.

Anstatt mit dem Wärmetauscher 3 Heizungswasser zu erwärmen, kann auch unter zusätzlicher Verwendung eines Lüfters direkt warme Luft zur Raumheizung verwendet werden. Als Wärmequelle **9** bzw. **9'** kann das Grundwasser, der Boden, sowie auch die Umgebungsluft dienen. Als Wärmequelle kann auch Raumluft verwendet werden, welche zur Raumlüftung in die Umgebung abgeführt werden soll.

## Patentansprüche

1. Verfahren zur Erzeugung sowohl von warmem Trink- sowie auch von Heizungswasser in einem ein Wärmetransportfluid verwendenden Kompressions-Wärmepumpenprozess, bei dem dieses Wärmetransportfluid zur Wärmeabgabe durch einen ersten Wärmetauscher **(1)** für das Trinkwasser und einen zweiten Wärmetauscher **(3)** für das Heizungswasser geführt wird, **dadurch gekennzeichnet, dass** eine Restwärme nach der Wärmeabgabe im ersten Wärmetauscher **(1)** ermittelt wird und bei einer danach ausreichenden, noch verbleibenden Restwärme das Wärmetransportfluid durch den zweiten Wärmetauscher **(3)** für das Heizungswasser geführt und bei einer nicht ausreichenden Restwärme an diesem wenigstens teilweise vorbeigeführt wird.

2. Verfahren nach Anspruch 1, **dadurch gekennzeichnet, dass** die Restwärme durch eine Temperaturmessung des Trinkwassers ermittelt wird und bevorzugt bei zu geringer Restwärme die Verdichterleistung im Kompressions-Wärmepumpenprozess erhöht und bei zu hoher erniedrigt wird.

3. Verfahren nach Anspruch 1 oder 2, **dadurch gekennzeichnet, dass** die Temperatur des Heizungswassers insbesondere im Rücklauf **(27)** gemessen und bei zu tiefer Temperatur die Verdichterleistung im Kompressions-Wärmepumpenprozess erhöht und bei zu hoher erniedrigt wird.

4. Anordnung zur Durchführung des Verfahrens nach einem der Ansprüche 1 bis 3 mit einer Kompressions-Wärmepumpenanordnung mit einem ersten Wärmetransportfluid, einem ersten Wärmetauscher **(1)** zur Erzeugung von warmem Trinkwasser und einem zweiten Wärmetauscher **(3)** zur Erzeugung von warmem Heizungswasser, **gekennzeichnet durch** einen Bypass **(5)**, mit dem der zweite Wärmetauscher **(3)** überbrückbar ist, eine Messeinrichtung **(15)**, mit der die Restwärme des Wärmetransportfluids nach Verlassen des ersten Wärmetauschers **(1)** bestimmbar ist und eine Steuereinrichtung **(21),** welche bei zu geringer Restwärme den Wärmetransportfluidfluss **durch** den zweiten Wärmetauscher **(3)** über den Bypass **(5)** reduziert, bevorzugt vollständig unterbindet.

5. Anordnung nach Anspruch 4, **gekennzeichnet durch** eine Wärmequelle **(9)**, ein zweites weiteres Wärmetransportfluid, eine Pumpe **(10)** und einen dritten im Kreislauf des ersten Wärmetransportfluids liegenden Wärmetauscher **(7)**, der mit der Wärmequelle **(9)** verbunden ist, wobei das zweite Wärmetransportfluid von der Wärmequelle **(9)** mit der Pumpe b zum dritten Wärmetauscher **(7)** transportierbar ist.

6. Anordnung nach Anspruch 4 oder 5, **gekennzeichnet durch** einen den ersten Wärmetauscher **(1)** aufweisenden Warmwasserboiler **(13),** aus dem das Trinkwasser abnehmbar ist und der ein mit einer mit der Steuereinrichtung **(21)** verbundenen Messeinrichtung **(15)** zusammenwirkendes Boilertemperaturmesselement hat.

7. Anordnung nach einem der Ansprüche 4 bis 6, **gekennzeichnet durch** einen mit der Steuereinrichtung **(21)** verbundenen Verdichter **(11)**, dessen Verdichterleistung von der Steuereinrichtung **(21)** bei zu geringer Restwärme erhöhbar bzw. bei zu hoher Verdichterleistung reduzierbar ist und bevorzugt die Steuereinrichtung **(21)** einen Frequenzumrichter **(44)** zur Steuerung der Verdichterleistung hat.

8. Anordnung nach einem der Ansprüche 4 bis 7, **gekennzeichnet durch** eine Temperaturmesseinrichtung **(25)** zur Messung der Temperatur des Heizwassers, welche bevorzugt im Heizwasserrücklauf **(27)** zum zweiten Wärmetauscher **(3)** angeordnet ist, und eine Verbindung **(39)** dieser Temperaturmesseinrichtung **(25)** mit der Steuereinrichtung **(21)**, um die Verdichterleistung des Verdichters **(14)** bei zu geringer Restwärme zu erhöhen bzw. bei zu hoher Verdichterleistung zu reduzieren.

9. Anordnung nach einem der Ansprüche 4 bis 8, **dadurch gekennzeichnet, dass** sie als Kompaktheizungsanordnung **(59)** mit zwei voneinander trennbaren, bevorzugt übereinander angeordneten Schrankeinheiten **(61a, 61b)** ausgebildet ist, deren eine, bevorzugt untere Schrankeinheit **(61a)** den ersten Wärmetauscher **(1')** mit Boiler **(13')** für das warme Trinkwasser hat und eine andere, bevorzugt obere Schrankeinheit **(61b)** elektrisch zu steuernde Baugruppen, wie Ventile sowie anzutreibende Baugruppen, wie Pumpen, Verdichter und Expansionsventile aufweist, welche in der Regel wartungsintensiver sind als die Baugruppen der einen, bevorzugt unteren Schrankeinheit **(61a)** und somit mit der anderen Schrankeinheit **(61b)** als Ganzes zu Servicezwecken abnehmbar und überprüfbar sind.

## Claims

1. Method of producing both hot drinking water and heating water in a compression heat pump process using a heat transfer fluid, in which the said heat transfer fluid, in order to release the heat, is led through a first heat exchanger (1) for the drinking water and a second heat exchanger (3) for the heating water,
**characterised in that** a residual heat is determined following the release of heat in the first heat exchanger (1) and if the residual heat still remaining is sufficient, the heat transfer fluid is led through the second heat exchanger (3) for the heating water, and if the residual heat is insufficient it is at least partially made to bypass the said heat exchanger.

2. Method according to Claim 1, **characterised in that** the residual heat is determined by measuring the temperature of the drinking water and the compressor output in the compression heat pump process is preferably increased if the residual heat is insufficient and decreased if the residual heat is excessive.

3. Method according to Claim 1 or 2, **characterised in that** the temperature of the heating water is measured, in particular, on the return flow (27) and the compressor output in the compression heat pump process is increased if the temperature is too low and decreased if it is too high.

4. Arrangement for performing the method according to any of claims 1 to 3 having a compression heat pump arrangement with a first heat transfer fluid, a first heat exchanger (1) for producing hot drinking water and a second heat exchanger (3) for producing hot heating water, **characterised by** a bypass (5) by means of which the second heat exchanger (3) can be bypassed, a measuring device (15) by means of which it is possible to determine the residual heat of the heat transfer fluid on leaving the first heat exchanger (1), and a control device (21), which if the residual heat is insufficient reduces or preferably completely prevents the flow of heat transfer fluid through the second heat exchanger (3) via the bypass (5).

5. Arrangement according to Claim 4, **characterised by** a heat source (9), a second further heat transfer fluid, a pump (10) and a third heat exchanger (7), which is situated in the circuit of the first heat transfer fluid and is connected to the heat source (9), it being possible to deliver the second heat transfer fluid from the heat source (9) to the third heat exchanger (7) by means of the pump (10).

6. Arrangement according to Claim 4 or 5, **characterised by** a hot water boiler (13) having the first heat exchanger (1), from which boiler the drinking water can be drawn and which has a boiler temperature measuring element interacting with a measuring device (15) connected to the control device (21).

7. Arrangement according to any of Claims 4 to 6, **characterised by** a compressor (11) which is connected to the control device (21) and the compressor output of which can be increased by the control device (21) if the residual heat is insufficient or reduced if the residual heat is excessive, the control device (21) preferably having a frequency converter (44) for controlling the compressor output.

8. Arrangement according to any of Claims 4 to 7, **characterised by** a temperature measuring device (25) for measuring the temperature of the heating water, which is preferably arranged in the heating water return flow (27) to the second heat exchanger (3), and by a connection (39) of this temperature measuring device (25) to the control device (21), in order to increase the output of the compressor (14) if the residual heat is insufficient or to reduce the output if the compressor output is too high.

9. Arrangement according to any of Claims 4 to 8, **characterised in that** it is designed as a compact heating arrangement (59) having two cabinet units (61a, 61b) that are separable from one another and preferably arranged on above the other, one of which, preferably the lower cabinet unit (61a), has the first heat exchanger (1') with boiler (13') for the hot drinking water, and the other of which, preferably the upper cabinet unit (61b) has electrically controlled sub-assemblies such as valves and driven sub-assemblies such as pumps, compressors and expansion valves, which generally require more servicing than the sub-assemblies of the one, preferably lower cabinet unit (61a) and for servicing purposes can therefore be removed and inspected with the other cabinet unit (61b) as a whole.

## Revendications

1. Procédé pour la production aussi bien d'eau chaude potable que d'eau chaude de chauffage dans un processus de thermopompe à compression utilisant un fluide caloporteur, procédé dans lequel on fait passer ce fluide caloporteur en vue d'une émission de chaleur par un premier échangeur de chaleur (1) pour l'eau potable et par un deuxième échangeur de chaleur (3) pour l'eau de chauffage, **caractérisé en ce qu'**il est calculé une chaleur résiduelle après l'émission de chaleur dans le premier échangeur de chaleur (1) et en cas de chaleur résiduelle encore présente suffisante, on fait passer le fluide caloporteur par le deuxième échangeur de chaleur (3) pour l'eau de chauffage et en cas de chaleur résiduelle non suffisante on fait passer au moins une partie à côté de celui-ci.

2. Procédé selon la revendication 1, **caractérisé en ce que** la chaleur résiduelle est calculée par une mesure de température de l'eau potable et de façon préférée, en cas de chaleur résiduelle trop faible, la capacité du compresseur dans le processus de thermopompe de compression est augmentée et en cas de chaleur résiduelle trop élevée elle est diminuée.

3. Procédé selon la revendication 1 ou 2, **caractérisé en ce que** la température de l'eau de chauffage est mesurée, en particulier dans un retour (27) et en cas de température trop basse, la capacité du compresseur dans le processus de thermopompe de compression est augmentée et en cas de température trop élevée, elle est abaissée.

4. Dispositif pour réaliser le procédé selon l'une des revendications 1 à 3 avec un dispositif de thermopompe de compression avec un premier fluide caloporteur, un premier échangeur de chaleur (1) pour la production d'eau potable chaude et un deuxième échangeur de chaleur (3) pour la production d'eau chaude de chauffage, **caractérisé par** un bipasse (5) avec lequel le deuxième échangeur de chaleur (15) est ponté, un dispositif de mesure (15) permettant de déterminer la chaleur résiduelle du fluide caloporteur après avoir quitté le premier échangeur de chaleur (1) et un dispositif de commande (21) qui, en cas de chaleur résiduelle trop faible, réduit le fluide caloporteur à travers le deuxième échangeur de chaleur (3) par l'intermédiaire du bipasse (5), de façon préférée l'interrompt totalement.

5. Dispositif selon la revendication 4, **caractérisé par** une source de chaleur (9), un deuxième autre fluide caloporteur, une pompe (10) et un troisième échangeur de chaleur (7) situé dans le circuit du premier fluide caloporteur et qui est raccordé à la source de chaleur (9), tandis que le deuxième fluide caloporteur peut être acheminé depuis la source de chaleur (9) avec la pompe (10) jusqu'au troisième échangeur de chaleur (7).

6. Dispositif selon la revendication 4 ou 5, **caractérisé par** un ballon d'eau chaude **(13)** comportant le premier échangeur de chaleur (1) à partir duquel l'eau potable peut être prélevée et qui possède un élément de mesure de la température du ballon coopérant avec un dispositif de mesure (15) relié au dispositif de commande (21).

7. Dispositif selon l'une des revendications 4 à 6, **caractérisé par** un compresseur (11) raccordé au dispositif de commande (21) dont la capacité de compression peut être augmentée en cas de chaleur résiduelle trop faible ou réduite en cas de chaleur résiduelle trop élevée et de préférence, le dispositif de commande (21) possède un convertisseur de fréquence (44) pour la commande de la capacité de compresseur.

8. Dispositif selon l'une des revendications 4 à 7, **caractérisé par** un dispositif de mesure de température (25) pour la mesure de la température de l'eau chaude qui est de préférence disposé dans le retour d'eau chaude (27) vers le deuxième échangeur de chaleur (3) et une connexion (39) de ce dispositif de mesure de température (25) avec le dispositif de commande (21) pour augmenter la capacité de compression du compresseur (14) en cas de chaleur résiduelle trop faible ou la réduire en cas de chaleur résiduelle trop élevée.

9. Dispositif selon l'une des revendications 4 à 8, **caractérisé en ce qu'**elle est conçue sous la forme d'un dispositif de chauffage compact (59) avec deux unités d'armoires (61a,61b) séparées entre elles, de préférence superposées, dont l'une, de préférence l'unité d'armoire inférieure (61a) comporte le premier échangeur de chaleur (1') avec le ballon (13') pour l'eau chaude potable et l'autre, de préférence l'unité d'armoire supérieure (61b) comporte des modules à commande électrique, tels que des soupapes ainsi que des modules à commande mécanique, tels que des pompes, compresseurs et soupapes de détente, qui en principe exigent plus d'entretien que les modules de l'unité d'armoire inférieure (61a) et par conséquent, avec l'autre unité d'armoire (61b) sont démontables et vérifiables en bloc à des fins de service d'entretien.
